# EUROPÄISCHE PATENTSCHRIFT

(11) **EP 0 393 489 B1**
(45) Veröffentlichungstag und Bekanntmachung des Hinweises auf die Patenterteilung: **28.07.1993**
(21) Anmeldenummer: 90106926.0
(22) Anmeldetag: 11.04.1990
(51) Int. Cl.: E05D 13/00

(54) **Schlaffseil-Sicherunsgerät**
Cable-breakage safety device
Dispositif de sécurité agissant en cas de rupture de câble

(30) Priorität: 21.04.1989 DE 3913214
(43) Veröffentlichungstag der Anmeldung: 24.10.1990
(73) Patentinhaber: MARANTEC ANTRIEBS- UND STEUERUNGSTECHNIK GMBH & CO. PRODUKTIONS KG, D-33428 Marienfeld (DE)
(72) Erfinder: Hörmann, Michael, D-4834 Marienfeld (DE)
(74) Vertreter: Flügel, Otto, Dipl.-Ing.

(56) Entgegenhaltungen:
- DE-A- 865 925
- DE-A- 2 725 939
- GB-A- 2 003 116

## Beschreibung

Die Erfindung bezieht sich auf ein Schlaffseil-Sicherungsgerät zur Überwachung der Zugbelastung eines Seilzuges für das Heben, Halten und gesteuerte Absenken eines wenigstens mit einer vertikalen Richtungskomponente über Kopf bewegbar geführten Torblattes eines Tores, wie Hubtor, Schwenktor, Deckengliedertor, mit einem Gehäuseteil, durch welches ein Seil des Seilzuges geführt ist und welches ein etwa senkrecht zum Verlauf des zugbelastet gestrafften Seiles versetzbar gelagertes Tastglied aufweist, das unter der Kraft einer vorgespannten Feder gegen das zugbelastet gestraffte Seil gedrückt ist und einen Schalter-Betätigungsteil aufweist, der sich bei Schlaffwerden des Seiles und dessen seitlicher Auslenkung unter der Kraft der Feder versetzt und damit einen elektrischen Schalter betätigt, wobei das Seil etwa im Eingangsbereich und im Ausgangsbereich des Gehäuseteils gegen senkrecht zur Längserstreckung des zugbelastet gestrafften Seiles gerichtete Versetzbewegungen zumindest in der Richtung abgestützt ist, die der Richtung der Bewegung entspricht, die das Tastglied unter der Kraft der Feder bei Schlaffwerden des Seiles ausführt.

Solche Schlaffseilsicherungen sind in vielfältiger Ausführung bekannt und werden bei der Halterung von Torblättern in der Regel paarweise verwandt, derart, daß die von oberhalb des Torblattes angeordneten Seiltrommeln auf- und abwickelbaren Seile mit ihren torblattseitigen Enden an dem Torblatt angreifen, und zwar bei mehrgliedrigen Toren, wie beispielsweise Deckengliedertoren, grundsätzlich an deren im Schließzustand unterem Paneel, um das Torblatt auch bei Bruch einer Scharnierverbindung zwischen den Paneelen zu halten. Die Seiltrommeln sind dabei auf einer Welle angeordnet, an der eine Gewichtsausgleichsfeder, ein Gegengewicht oder dergleichen für die Kompensation des Torblattgewichtes angeordnet bzw. angreifen kann, an einer solchen Welle wird bei den Gegenständen der hier in Rede stehenden Art in der Regel auch ein motorischer Antrieb angreifen, beispielsweise ein Elektromotor, um über die Seile des Seilzuges das Torblatt von der Schließstellung in die Öffnungsstellung aufwärts zu bewegen, in umgekehrter Richtung unter kontrollierter Geschwindigkeit abzusenken, in Zwischenstellungen zu halten bzw. im Falle eines Hindernisses in der Bewegung zu stoppen oder in umgekehrter Bewegungsrichtung von dem Hindernis fortzubewegen.

Für die Überwachung des im Normalbetriebszustand praktisch immer unter Zugbelastung straff gespannten Seiles gibt es eine Reihe von Gründen: so kann man mit Hinblick auf ein zu verhinderndes Abstürzen des Tores einen Bruch des Seiles selbst, einen Ausfall der Gewichtsausgleichseinrichtung und - je nach Ausbalancierung des Torblattgewichtes - auch den Betriebszustand eines Antriebsmotors überwachen, wenn dessen Getriebe nicht bereits selbsthemmend ausgebildet ist. In diesen Fällen richtet sich das Hauptaugenmerk der Überwachung der Zugspannung in dem jeweiligen Seil bzw dessen praktisch gradlinig straffem Verlauf hauptsächlich auf den Gesichtspunkt, das Torblatt durch eine Fangeinrichtung vor dem Abstürzen zu bewahren. Aus diesem Grunde sind eine Vielzahl bekannter Schlaffseilsicherungen mit einer solchen Fangeinrichtung gekoppelt und bilden ein mehr oder weniger in sich geschlossenes, mechanisches Überwachungs- und Fanggerät, das grundsätzlich am Torblatt, bei mehrgliedrigen Toren in dessen unterem Kantenbereich, angeordnet ist.

Eine solche unmittelbar vom Schlaffwerden des überwachten Seiles mechanisch gesteuerte Fangeinrichtung soll auch verhindern, daß sich das Tor bei Brechen eines der beiden, jeweils zu einer der Seitenkanten des Tores angeordneten Seile schräg setzt und verkantet, so daß es schwierig ist, das Tor provisorisch zu bewegen bzw. im Zuge der Reparatur wieder in Ordnung zu bringen.

Dieses letztere Problem des Brechens bzw. des Entfallens der Zugspannung in einem von zwei beidseitig des Torblattes angeordneten Seilen und der damit gegebenen Gefahr der Verkantung und Verklemmung des Torblattes kann man in weiterhin bekannter Weise auch dadurch lösen, daß der Seilbruch bzw. das Schlaffwerden eines der Seile in ein elektrisches Signal umgesetzt wird, das einen Antriebsmotor stillsetzt oder hinsichtlich seiner Drehbewegung umkehrt, um ein Verklemmen zu vermeiden. Diese letztere Art der Schlaffseilüberwachung wird auch dann verwendet werden, wenn das Torblatt beispielsweise im Zuge seiner Schließbewegung gegen ein Hindernis anläuft, wodurch eines oder beide der Seile schlaff werden. Hier handelt es sich demnach um eine Sicherheitseinrichung. Des weiteren ist es möglich, ein durch Schlaffwerden eines Seiles ausgelöstes elektrisches Signal zur Auslösung einer entsprechend ausgerüsteten Fangeinrichtung zu verwenden.

Ein bekanntes, gattungsgemäßes Schlaffseil-Sicherungsgerät - DE-A-2725939 - weist gegenüber anderen Vorstellungen - z.B. DE-GM 79 12 249 - zwar den Vorteil auf, daß das Seil durch den Gehäuseteil des Sicherungsgerätes zugkraftübertragend hindurchgeführt ist und mit seinem torblattseitigen Ende unmittelbar an dem Torblatt angreift, doch ist das Sicherungsgerät bzw. dessen Gehäuseteil ortsfest angeordnet, was bis auf den Ausnahmefall, daß das zugbelastet gestraffte Seil in jeder Betriebslage ohne seitliche Versetzung bleibt, mit einer Führungswirkung auf das Seil verbunden ist. Dadurch werden auf das Gerät bzw. dessen Gehäuseteil durch das auf seiner Längsrichtung sich versetzende Seil entsprechend seitliche Kraftkomponenten ausgeübt, die von der ortsfesten Halterung des Gehäuseteils entsprechend aufgenommen werden müssen. Es handelt sich dabei also nicht um die Kräfte, die durch die federbelastete Abtastung des Seils innerhalb des Gerätes bzw. dessen Gehäuseteil entstehen und entsprechend gering sind, sondern um die für die Seilführung des sich im Betriebsablauf längsversetzenden Seiles aufzunehmenden Kräfte, die in Abhängigkeit von der jeweils vorhandenen Belastung des Seiles erheblich sein können. Das bedeutet, daß die ortsfeste Halterung des Gerätes bzw. dessen Gehäuseteils insgesamt und die eingangs- und ausgangsseitigen Abstützungen des Seiles innerhalb des Gehäuseteils für die Aufnahme solcher erheblicher Kräfte ausgebildet sein müssen.

Damit liegt der Erfindung die Aufgabe zugrunde, ein Schlaffseil-Sicherungsgerät der eingangs genannten Art so auszugestalten, daß eine Aufnahme der Seilzugkräfte zumindest weitgehend vermieden, ein nachträglicher Einbau an bestehenden Seilzügen von Torblättern unproblematisch und ein Einbau mit kurzen und möglichst wenig störenden Kabelführungen möglich ist.

Ausgehend von einem Schlaffseil-Sicherungsgerät der eingangs genannten Art wird diese Aufgabe erfindungsgemäß dadurch gelöst, daß das Gehäuseteil in jeder eine senkrecht zur Längsrichtung des zugbelastet gestrafften Seiles verlaufende Komponente enthaltenden Richtung zumindest innerhalb eines die Betriebslagen des zugbelasteten Seiles umgreifenden Raumes frei bewegbar entweder durch das Seil, wobei das Gehäuseteil an einer Stelle des Seiles gegen Versetzbewegungen in Seillängsrichtung festgelegt ist, oder durch ein Halteglied gehalten ist, das als Abspanneinrichtung ausgebildet ist, die in Seilform, Bandform oder dergleichen einen Endes ortsfest und anderen Endes am Gehäuseteil festgelegt ist, durch das das Seil in seiner Längsrichtung frei beweglich geführt ist.

Erfindungsgemäß gibt es zwei grundsätzliche Anordnungsvorstellungen des Schlaffseil-Sicherungsgerätes:

Das Sicherungsgerät bzw. dessen Gehäuseteil wird gegen Versetzbewegungen in Längsrichtung des Seiles an diesem gesichert gehalten, vorzugsweise durch eine entsprechende Verklemmung, was in einfachster Weise mit Hilfe einer Klemmschraube geschehen kann. Dabei kann eine solche Verklemmung an einer Stelle des Gehäuseteiles vorgesehen sein, vorzugsweise wird sie im Angriffsbereich des Tastgliedes an dem Seil angeordnet. Zur Erleichterung der Ausbeulung des Seiles bei Entfallen der Zugkräfte im Seil wird dieses im Eingangsbereich und im Ausgangsbereich leicht verschieblich gelagert, beispielsweise über Kugellager oder Rollen, so daß sich das Tastglied unter der Kraft der Feder und Ausbeulen des Seiles empfindlich gestaltet. Eine Alternative wäre, das Seil beispielsweise im Eingangsbereich an dem Gehäuse verschiebesicher festzulegen und im Ausgangsbereich und im Angriffsbereich des Tastgliedes leicht verschiebbar, beispielsweise mittels Rollen, zu lagern; der Erfolg wäre der gleiche. In diesen Fällen ist das Sicherungsgerät ausschließlich an dem Seil gehalten und macht dessen Bewegungen in Längsrichtung mit.

Eine andere Vorstellung geht dahin, das Seil durch das Gehäuseteil des Sicherungsgerätes leichtgängig längsverschiebbar zu führen. Eine leichtgängige Längsverschiebbarkeit des unter Zugbelastung stehenden Seiles gegenüber dem Gehäuse des Sicherungsgerätes könnte man dadurch erreichen, daß man sowohl im Eingangs- und im Ausgangsbereich des Gehäuses als auch im Angriffsbereich des Tastgliedes das Seil über Lager bzw. Rollen führt. Diese letztere Anordnung hat den besonderen Vorteil, daß man die elektrische Verbindungsleitung in Form eines Kabels entsprechend kurz und hindernisfrei halten bzw. führen kann.

Dabei wird das Sicherungsgerät derart gehalten, daß es lediglich in Seillängsrichtung mehr oder weniger unbeweglich gehalten wird, während es Seilauslenkbewegungen senkrecht zur Längsrichtung des Seiles folgend angeordnet ist. Dies geschieht mit Hilfe einer Abspanneinrichtung, die in Seilform, Bandform oder dergleichen einseitig ortsfest und anderen Endes am Gehäuseteil des Sicherungsgerätes festgelegt ist. Es handelt sich kurz gesagt hier um eine Halterung des Sicherungsgerätes gegen ins Gewicht fallende Bewegungen des Sicherungsgerätes in Seillängsrichtung, die andererseits die Bewegung des Sicherungsgerätes in einer Ebene senkrecht zur Längsrichtung des Seiles erlaubt. Eine solche Halterung ist dann angezeigt, wenn beispielsweise bei einem Deckengliedertor die in der Öffnungsstellung des Torblattes zwischen dem torblattseitigen Seilende und einer Seiltrommel für die Aufnahme des Seiles verbleibende freie Seillänge gering ist. Eine solche Seiltrommel führt nämlich vielfach das Seil nicht nur in Achsrichtung der Trommel, sondern bei deren konischer Ausbildung auch senkrecht zur Achsrichtung in unterschiedlichen Einlauf- bzw. Ablaufstellungen.

Vorstehende und weitere bevorzugte Ausführungen der Erfindung ergeben sich aus den Unteransprüchen im Zusammenhang mit dem in der Zeichnung wiedergegebenen Ausführungsbeispiel, auf das besonders Bezug genommen wird und dessen nachstehende Beschreibung die Erfindung näher erläutert. Es zeigen
- Figur 1: eine senkrecht zur Längserstreckung des Seiles gesehene Ansicht des Sicherungsgerätes nach dem Ausführungsbeispiel bei abgenommenem Gehäuseoberteil unter Normalbetriebsbedingungen, d.h. durch Zugbelastung gestrafftem Seilverlauf;
- Figur 2: eine gemäß Figur 1 entsprechende Darstellung bei Auslenkung des Seiles wegen Fortfall von dessen Zugbelastung;
- Figur 3: einen Schnitt nach der Linie III-III in Figur 2.

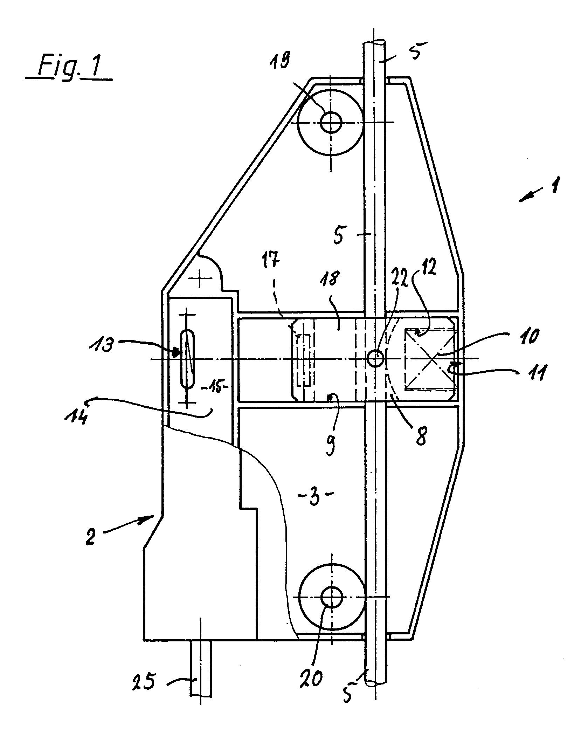

Die Figuren 1 bis 3 zeigen ein Ausführungsbeispiel der Art, bei welchem das Gehäuseteil des insgesamt mit 1 bezeichneten Schlaffseil-Sicherungsgerätes an dem Seil gegen Verschiebungen in dessen Längsrichtung gehalten ist, d.h. das Sicherungsgerät 1 wird in seiner Gesamtheit - insoweit ausgenommen das andere Ende der elektrischen Verbindungsleitung zwischen dem Kontakt des Sicherungsgerätes und der nicht dargestellten Steuerungseinrichtung für einen Antriebsmotor, eine elektrische Fangeinrichtung oder dergleichen - an einem bestimmten Seilabschnitt angeordnet und von dem Seil in diesem Abschnitt gehalten. Die andere, eingangs genannte Möglichkeit bestünde darin, das Sicherungsgerät 1 ortsfest bzw. gegen Bewegungen in Seillängsrichtung zu halten, beispielsweise an der Zarge des Tores, und das Seil demgegenüber längsverschiebbar durch den Gehäuseteil 2 zu führen.

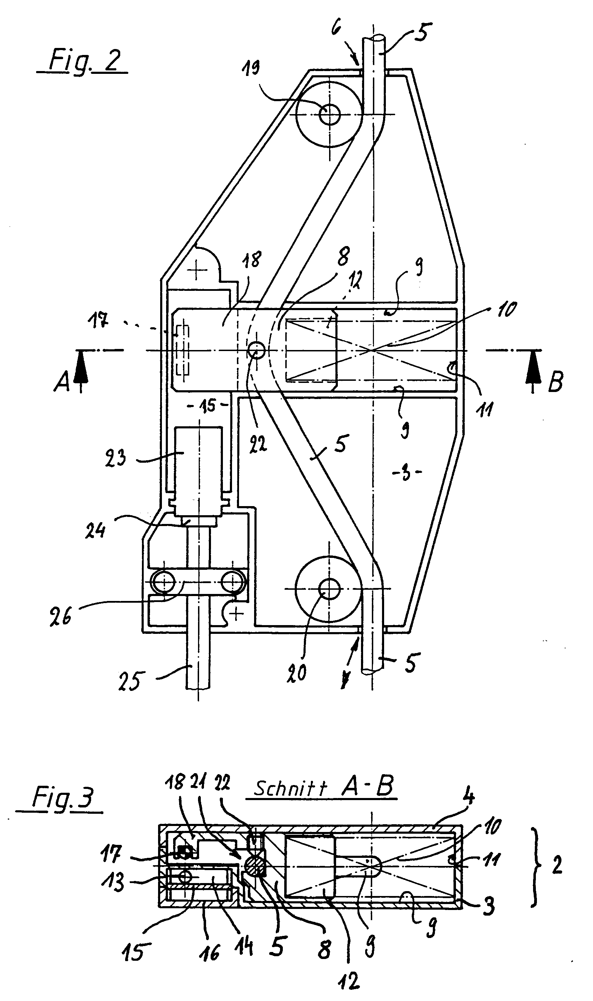

Der Gehäuseteil 2 des Sicherungsgerätes 1 ist nach dem wiedergegebenen Ausführungsbeispiel insoweit dreiteilig ausgeführt, als er einen zweischaligen Gehäuseaufbau aus einem Gehäuseunterteil 3 und einem Gehäuseoberteil 4 aufweist, wobei im Bereich des elektrischen Kontaktes und dessen Anschluß noch ein Deckelteil 14 vorgesehen ist, der insoweit dem Gehäuseunterteil 3 zugeordnet werden kann. Diese Gehäuseanordnung ist aus dem Schnittbild gemäß Figur 3 ersichtlich.

Die Figuren 1 und 2 zeigen eine Draufsicht auf das Gehäuseunterteil 3 bei abgenommenem Gehäuseoberteil 4; dabei ist in Figur 1 die Normalbetriebssituation des zugbelastet straff gespannten Seiles 5 wiedergegeben, daß - wie hier im Idealfall dargestellt - geradlinig durch den Gehäuseteil 2 hindurchgeführt ist, während in Figur 2 die Alarm-Situation wiedergegeben ist, die bei entfallender Zugbelastung des Seiles 5 auftritt und zur Auslösung eines elektrischen Signales führt.

Wie die Figuren 1 und 2 erkennen lassen, durchgreift das ununterbrochen von einer nicht dargestellten Seilrolle bis zur Festlegung an dem Torblatt durch das Gehäuseteil 2 durchlaufende Seil 5 Gehäusewanddurchführungen 6 und 7 im Eingangs- und Ausgangsbereich des Gehäuseteils 2. Etwa im Mittelbereich dieser Durchführungsstrecke ist ein Tastglied 8 vorgesehen, das senkrecht zur Durchführungsrichtung des Seiles 5 in nicht näher dargestellten Führungsausbildungen 9, beispielsweise auch einer Langlochführung gemäß Figur 3, verschiebbar geführt und von einer Feder 10 senkrecht zur Längsrichtung des Seiles 5 druckbeaufschlagt ist, die vorzugsweise aus einem zylindrisch gewendelten Federdraht besteht. Die Feder 10 stützt sich mit ihrem von dem Tastglied 8 abgewandten Ende an einer Seitenwandung 11 des Gehäuseteils 3 ab und greift mit ihrem entgegengesetzten Ende in einen Federaufnahmeraum 12 des Tastgliedes 8 ein. Das Tastglied 8 greift demnach an einer Seite des unter Zugbelastung straff gespannten Seiles 5 an, und zwar unter der Kraft der in diesem Zustand vorgespannten Feder 10. An der dem Tastglied 8 bzw. der Feder 10 entgegengesetzten Seite des Seiles 5 ist - wie die Figuren erkennen lassen - ein Schalter 13 angeordnet, der im Ausführungsbeispiel als Reedkontakt ausgebildet ist. Dieser Schalter befindet sich in einem abgeschlossenen Gehäuseraum 14, so daß Beschädigungen, Verschmutzungen und dergleichen verhindert sind. Der Schalter 13 ist auf einer Platine 15 angeordnet, die in dem Gehäuseunterteil 3 eingesetzt ist und ein Steckergehäuse 23 trägt, dessen elektrische Kontakte mit den Anschlüssen des Reed-Schalter 13 entsprechend verbunden sind. In das Steckergehäuse 23 ist ein Stecker 24 eingeführt, dessen Anschlüsse an ein Kabel 25 angeschlossen sind, das in bekannter Weise über eine zugentlastende Klemmeinrichtung 26 am Gehäuseteil festgelegt ist.

An dem Tastglied 8 ist ein das Seil 5 im Abtastbereich übergreifender Arm 18 vorgesehen, der ein Schalterbetätigungsteil 17 trägt, welches im vorliegenden Falle als Dauermagnet ausgebildet ist und den als Reedkontakt ausgebildeten Schalter 13 betätigt, sobald das Abtastglied 8 bzw. dessen Übergreifarm 18 in einen entsprechenden Nahbereich bzw. Betätigungsbereich für den Schalter 13 gelangt. Dies ist aus dem Vergleich der Figuren 1 und 2 ohne weiteres ersichtlich.

Im Nahbereich der Gehäusewanddurchführungen 6 und 7 im Eingangs- und Ausgangsbereich des Gehäuseteils 2 sind Lager bzw. Rollen 19 und 20 angeordnet, die seitlich des Seiles 5 angreifen, und zwar an der Seite des Seiles, die derjenigen des Angriffes durch das Abtastglied bzw. derjenigen der Feder 10 gegenüberliegt. Im Bereich des Abtastgliedes greift das Seil in eine Aufnahmenut 21 des Abtastgliedes 8 ein und ist dort - wie dies die Schnittdarstellung gemäß Figur 3 erkennen läßt - mit Hilfe einer Klemmschraube 22 festgelegt, so daß das gesamte Sicherungsgerät 1 sich in Längsrichtung des Seiles 5 gegenüber diesem nicht verschieben kann. Das Gerät ist demnach an dem Seil gehalten und von diesem getragen.

Figur 1 zeigt die normale, betriebsbereite Situation, in der das überwachte Seil 5 aufgrund der Zugbelastung gestrafft und das Gehäuseteil 2 etwa gradlinig durchgreift. In diesem Falle liegt das Abtastglied 8 unter der Kraft der vorgespannten Feder 10 überwachend an der einen Seite des Seile 5 an. Sobald die Zugbelastung des Seiles verschwindet, sei es durch Seilbruch, durch Ausfall einer Gewichtskompensierungseinrichtung, eines Antriebes oder dergleichen, verschiebt sich das Abtastglied 8 unter der Kraft der vorgespannten Feder 10 unter Auswölbung des Seiles 5, wie dies in Figur 2 dargestellt ist. Aufgrund der Abstützung durch die Lager bzw. Rollen 19 und 20 folgt das Seil dieser Auslenkbewegung ohne sonderliche Reibung. Der Schalterbetätigungsteil 17 in Form eines Dauermagneten gelangt in den Schaltbereich des als Reedkontakt ausgebildeten Schalters 13 und betätigt diesen, so daß über die Steckverbindung 23, 24 und das Kabel 25 ein entsprechendes elektrisches Signal an eine - vorzugsweise ortsfeste - Schalteinrichtung geführt wird, die ein Abschalten bzw. Umschalten des elektrischen Antriebes, eine Auslösung einer Fangeinrichtung oder dergleichen bewirkt.

Es ist ohne weiteres ersichtlich, daß das Seil 5 bei abgenommenem Gehäuseoberteil 4 in das Gehäuseunterteil 3 eingeführt und mit dem unter Zusammendrücken der Feder 10 zurückgeschobenem Abtastteil 8 in Verbindung gebracht werden kann, ohne daß das Seil unterbrochen oder hinsichtlich eines seiner beiden Enden gelöst werden muß. Es ist weiterhin ersichtlich, daß die im Normalbetriebszustand von dem Seil aufzunehmenden Zugkräfte praktisch keine Auswirkungen auf das Sicherungsgerät haben, wenn man einmal von der Kraft der durch die Straffung des Seiles 5 ausgeübten Federvorspannung absieht. Es ist weiterhin ersichtlich, daß das Sicherungsgerät an beliebiger Stelle des Seiles angeordnet werden kann, solange dieses in den verschiedenen vorkommenden Betriebszuständen einen entsprechend gestrafft gehaltenen Abschnitt aufweist. Damit kann das Sicherungsgerät mit Abstand von dem Torblatt angeordnet werden, was sich auf die Führung des Kabels 25 vorteilhaft auswirken kann.

In der anderen, eingangs geschilderten Ausführung kann das Sicherungsgerät ortsfest oder doch nur in einer etwa senkrecht zur Seillängsrichtung verlaufenden Ebene beweglich gehalten sein, wobei das Seil im Normalbetriebszustand das Gehäuseteil 2 durchläuft. In einem solchen Falle würde man auch den Angriff des Abtastgiedes 8 reibungsarm gestalten, beispielsweise also mittels eines Lagers oder einer Rolle ausführen, so daß das Seil hinsichtlich der Abstützung an dem Gehäuseteil 2 insgesamt reibungsarm in Längsrichtung beweglich aufgenommen ist. Diese Art der Seilüberwachung bietet eine weitergehende Möglichkeit, die Kabelverbindung 25 besonders vorteilhaft kurz und raumgünstig zu gestalten.

## Patentansprüche

1. Schlaffseil-Sicherungsgerät (1) zur Überwachung der Zugbelastung eines Seilzuges für das Heben, Halten und gesteuerte Absenken eines wenigstens mit einer vertikalen Richtungskomponente über Kopf bewegbar geführten Torblattes eines Tores, wie Hubtor, Schwenktor, Deckengliedertor, mit einem Gehäuseteil (2), durch welches ein Seil (5) des Seilzuges geführt ist und welches ein etwa senkrecht zum Verlauf des zugbelastet gestrafften Seiles (5) versetzbar gelagertes Tastglied (8) aufweist, das unter der Kraft einer vorgespannten Feder (10) gegen das zugbelastet gestraffte Seil (5) gedrückt ist und einen Schalter-Betätigungsteil (17) aufweist, der sich bei Schlaffwerden des Seiles (5) und dessen seitliche Auslenkung unter der Kraft der Feder (10) versetzt und damit einen elektrischen Schalter (13) betätigt, wobei das Seil (5) etwa im Eingangsbereich und im Ausgangsbereich des Gehäuseteils (2) gegen senkrecht zur Längserstreckung des zugbelastet gestrafften Seiles (5) gerichtete Versetzbewegungen zumindest in der Richtung abgestützt ist, die der Kraft der Bewegung entspricht, die das Tastglied (8) unter der Kraft der Feder (10) bei Schlaffwerden des Seiles (5) ausführt,
**dadurch gekennzeichnet**,
daß das Gehäuseteil (2) in jeder eine senkrecht zur Längsrichtung des zugbelastet gestrafften Seiles (5) verlaufende Komponente enthaltenden Richtung zumindest innerhalb eines die Betriebslagen des zugbelasteten Seiles umgreifenden Raumes frei bewegbar entweder durch das Seil (5), wobei das Gehäuseteil (2) an einer Stelle des Seiles (5) gegen Versetzbewegungen in Seillängsrichtung festgelegt ist, oder durch ein Halteglied gehalten ist, das als Abspanneinrichtung ausgebildet ist, die in Seilform, Bandform oder dergleichen einen Endes ortsfest und anderen Endes am Gehäuseteil festgelegt ist, durch das das Seil in seiner Längsrichtung frei beweglich geführt ist.

2. Sicherungsgerät nach Anspruch 1,
**dadurch gekennzeichnet,**
daß das Tastglied (8) etwa im Längsmittelbereich zwischen den Abstützstellen (19, 20) an dem Seil (5) angreift.

3. Sicherungsgerät nach einem der Ansprüche 1 oder 2,
**dadurch gekennzeichnet,**
daß der Schalter (13) an der dem seitlich des Seiles (5) angeordneten Tastglied (8) gegenüberliegenden Seite des Seiles (5) angeordnet ist und daß der Schalter-Betätigungsteil (17) über das Seil (5) hinweggreifend an dem Tastglied (8) angeordnet ist.

4. Sicherungsgerät nach einem der Ansprüche 1 bis 3,
**dadurch gekennzeichnet,**
daß der Schalter (13) in einem abgeschlossenem Gehäuseraum (14) angeordnet ist.

5. Sicherungsgerät nach Anspruch 4,
**dadurch gekennzeichnet,**
daß der Schalter-Berätigungsteil (17) einen Permanentmagneten aufweist und daß der Schalter (13) mittels Magnetkräften betätigbar, insbesondere als Reedkontakt, ausgebildet ist.

6. Sicherungsgerät nach einem der Ansprüche 1 bis 5,
**dadurch gekennzeichnet,**
daß das Seil (5) zumindest bereichzweise leicht längsversetzbar, insbesondere rollgelagert, durch das Gehäuseteil (2) hindurchgeführt ist.

7. Sicherungsgerät nach einem der Ansprüche 1 bis 6,
**dadurch gekennzeichnet,**
daß das Seil (5) gegenüber einer Stelle des Gehäuseteils (2) gegen Versetzbewegungen in seiner Längsrichtung gesichert festlegbar (22) ist.

8. Sicherungsgerät nach Anspruch 7,
**dadurch gekennzeichnet,**
daß das Seil (5) an dem Tastglied (8) festgelegt ist.

9. Sicherungsgerät nach Anspruch 7 oder 8,
**dadurch gekennzeichnet,**
daß für die Festlegung des Seiles (5) ein Klemmglied (22) vorgesehen ist, das insbesondere ein Schraubelement aufweist.

10. Sicherungsgerät nach einem der Ansprüche 7 bis 9,
**dadurch gekennzeichnet,**
daß das Seil (5) an im Eingangsbereich und im Ausgangsbereich des Gehäuseteils (2) drehgelagert angeordneten Rollen (19, 20) geführt und abgestützt und an dem Tastglied (8) mittels eines Klemmgliedes (22) in wählbarer Position längs des Seiles (5) gegenüber Verschiebungen in dessen Längsrichtung festlegbar ist.

11. Sicherungsgerät nach einem der Ansprüche 1 bis 6,
**dadurch gekennzeichnet,**
daß das Halteglied im Nahbereich einer Seilaufnahmetrommel oder dergleichen Seilspeicher, beispielsweise an der Torzarge, angeordnet ist.

12. Sicherungsgerät nach Anspruch 11,
**dadurch gekennzeichnet,**
daß das Seil sowohl an dem Gehäuseteil als auch an dem Tastglied leicht längsbeweglich, insbesondere über Rollen abgestützt, geführt ist.

13. Sicherungsgerät nach einem der Ansprüche 1 bis 12,
**dadurch gekennzeichnet,**
daß der Schalter (13) über einen elektrischen Steckkontakt (23, 24) mit einem nach außerhalb des Gehäuseteils (2) geführten Kabel (25) verbunden ist.

## Claims

1. Slack cable securing device (1) for monitoring the tensile load on a cable line for the raising, stopping and controlled lowering of at least one door leaf of a door such as a lift-up door, swing door or up-and-over door, which is movable overhead with at least a vertical component of direction, having a housing portion (2) through which a cable (5) of the cable line is passed and which has a sensor member (8) mounted so as to be movable substantially perpendicularly to the direction of travel of the taut, tensioned cable (5), said sensor member (8) being pressed against the taut, tensioned cable (5) under the force of a biased spring (10) and having a switch actuating member (17) which moves on slackening of the cable (5) and lateral deflection thereof under the force of the spring (10) and thereby actuates an electric switch (13), the cable (5) being supported, substantially in the entry and exit areas of the housing portion (2), against movements directed perpendicularly to the longitudinal direction of the taut tensioned cable (5), at least in the direction corresponding to the force of the movement performed by the sensor member (8) under the force of the spring (10) when the cable (5) slackens, characterised in that the housing portion (2) is held so as to be freely movable in each direction containing a component which runs perpendicularly to the longitudinal direction of the taut, tensioned cable (5), at least within a space encompassing the operating positions of the tensioned cable, either by the cable (5), where the housing portion (2) is secured at one point of the cable (5) against movements of deflection in the longitudinal direction of the cable, or by a retaining member constructed as a tension relieving device taking the form of a cable, belt or the like, fixedly mounted at one end and secured to the housing portion at the other end, the cable being guided through the housing portion so as to be freely movable in the longitudinal direction.

2. Securing device according to claim 1, characterised in that the sensor member (8) engages on the cable (5) substantially in the central longitudinal region between the support points.

3. Securing device according to one of claims 1 or 2,
characterised in that the switch (13) is arranged on the side of the cable (5) located opposite the sensor member (8) which is arranged to the side of the cable (5) and in that the switch actuating member (17) is arranged on the sensor member (8), projecting over the cable (5).

4. Securing device according to one of claims 1 to 3,
characterised in that the switch (13) is mounted in a closed housing chamber (14).

5. Securing device according to claim 4, characterised in that the switch actuating member (17) has a permanent magnet and in that the switch (13) is constructed so as to be actuated by magnetic forces and in particular is constructed as a Reed contact.

6. Securing device according to one of claims 1 to 5,
characterised in that the cable (5) is guided through the housing portion (2) so as to be readily longitudinally movable, at least in parts, and in particular it is mounted on roller bearings.

7. Securing device according to one of claims 1 to 6,
characterised in that the cable (5) can be fixed (22) relative to part of the housing portion (2) so as to be secured against shifting movements in its longitudinal direction.

8. Securing device according to claim 7, characterised in that the cable (5) is fixed to the sensor member (8).

9. Securing device according to claim 7 or 8,
characterised in that a clamping member (22),
particularly comprising a screw element, is provided for fixing the cable (5).

10. Securing device according to one of claims 7 to 9,
characterised in that the cable (5) is guided and supported on rollers (19,20) mounted on rotary bearings in the entry and exit areas of the housing portion (2) and can be fixed on the sensor member (8) by means of a clamping member (22) in any selected position along the cable (5) to prevent it shifting in the longitudinal direction.

11. Securing device according to one of claims 1 to 6,
characterised in that the retaining member is arranged in the vicinity of a cable drum or similar cable store, for example on the frame of the door.

12. Securing device according to claim 11,
characterised in that the cable is guided so as to move easily in the longitudinal direction both on the housing portion and on the sensor member and more particularly is supported on rollers.

13. Securing device according to one of claims 1 to 12,
characterised in that the switch (13) is connected, via an electric push-in contact (23,24), to an electric cable (25) passing to the outside of the housing portion (2).

## Revendications

1. Dispositif de sécurité agissant en cas de rupture de câble (1) pour la surveillance de la mise sous tension d'un câble servant à soulever, maintenir et abaisser de façon commandée un vantail de porte guidé de façon à pouvoir se mouvoir en tête au moins avec une composante dans le sens verticale, porte telle que porte relevable, porte pivotante, porte articulée en plafond, avec un carter (2), à travers lequel on fait passer un brin (5) du câble et qui présente un organe de palpage (8) monté de façon à pouvoir se déplacer à peu près perpendiculairement au parcours du câble (5) raidi par la mise en tension, organe qui est pressé contre le câble (5) raidi par la mise en tension sous l'action d'un ressort précontraint (10) et présente une pièce (17) actionnant un interrupteur, qui se déplace quand le câble (5) se rompt à la suite de sa déviation latérale sous l'action du ressort (10) et actionne de cette façon un interrupteur électrique (13), dispositif dans lequel le câble (5) est appuyé à peu près dans la zone d'entrée et dans la zone de sortie du carter (2) et empêché de subir des mouvements de déplacement dirigés perpendiculairement au trajet longitudinal du câble raidi par la mise sous tension au moins dans le sens, qui correspond à la force du mouvement qu'exécute l'organe de palpage (8) sous l'action du ressort (10) quand le câble (5) se rompt, dispositif caractérisé en ce que le carter (2) est maintenu dans celle des directions contenant une composante s'étendant perpendiculairement au sens longitudinal du câble (5) raidi par sa mise sous tension au moins à l'intérieur d'un espace entourant les positions de fonctionnement du câble mis en tension de façon à pouvoir se mouvoir librement, soit par le câble (5), le carter (2) étant fixé à un endroit du câble (5) de façon à ne pas pouvoir subir de mouvement de déplacement dans le sens longitudinal de celui-ci, soit par un organe d'arrêt, qui est constitué comme un dispositif de blocage, qui est fixé sous forme d'un câble, d'un ruban ou analogue à poste fixe à une extrémité et à l'autre extrémité sur le carter, à travers lequel on fait passer le câble de façon qu'il puisse se mouvoir librement dans son sens longitudinal.

2. Dispositif de sécurité selon la revendication 1, caractérisé en ce que l'organe de palpage (8) vient en prise sur le câble (5) à peu près dans la zone médiane longitudinale entre les emplacements d'appui (19, 20).

3. Dispositif de sécurité selon la revendication 1 ou 2, caractérisé en ce que l'interrupteur (13) est disposé sur le côté du câble (5) situé en regard de l'organe de palpage (8) disposé sur le côté du câble (5) et en ce que la pièce d'actionnement de l'interrupteur (17) est disposée en s'écartant du câble (5) sur l'organe de palpage.

4. Dispositif de sécurité selon l'une des revendications 1 à 2, caractérisé en ce que l'interrupteur (13) est disposé dans un boîtier (14) fermé.

5. Dispositif de sécurité selon la revendication 4, caractérisé en ce que la pièce d'actionnement de l'interrupteur (17) présente un aimant permanent et en ce que l'interrupteur (13) peut être actionné au moyen des forces magnétiques, en particulier comme contact de Reed.

6. Dispositif de sécurité selon l'une des revendications 1 à 5, caractérisé en ce que le câble (5) passe à travers le carter (2) en pouvant facilement se déplacer longitudinalement, en particulier en étant monté sur des roulements.

7. Dispositif de sécurité selon l'une des revendications 1 à 6, caractérisé en ce que le câble (5) peut être fixé en étant bloqué en regard d'un endroit du boîtier (2) contre des mouvements de déplacement dans son sens longitudinal.

8. Dispositif de sécurité selon la revendication 7, caractérisé en ce que le câble (5) est fixé sur l'organe de palpage (8).

9. Dispositif de sécurité selon la revendication 7 ou 8, caractérisé en ce que pour la fixation du câble (5) il est prévu un organe de serrage (22), qui présente en particulier, un élément à vis.

10. Dispositif de sécurité selon l'une des revendications 7 à 9, caractérisé en ce que le câble (5) passe et est soutenu sur des galets (19, 20) disposés dans la zone d'entrée et la zone de sortie du carter (2) en étant montés dans des crapaudines et peut être fixé sur l'organe de palpage (8) au moyen d'un organe de serrage (22) dans n'importe quelle position le long du câble (5) de façon à de pas subir de déplacements dans son sens longitudinal.

11. Dispositif de sécurité selon l'une des revendications 1 à 6, caractérisé en ce que l'organe de maintien est disposé à proximité d'un tambour de réception du câble ou d'un mécanisme analogue d'alimentation du câble, par exemple sur l'huisserie de la porte.

12. Dispositif de sécurité selon la revendication 11, caractérisé en ce que le câble passe facilement en se déplaçant longitudinalement aussi bien sur le carter que sur l'organe de de palpage aussi, en s'appuyant en particulier sur des galets.

13. Dispositif de sécurité selon l'une des revendications 1 à 12, caractérisé en ce que l'interrupteur (13) est relié par un contact électrique (23, 24) à un câble (25) passant à l'extérieur du carter (2).
